# EUROPEAN PATENT APPLICATION

(11) **EP 1 739 815 A1**
(43) Date of publication of application: **03.01.2007**
(21) Application number: 05742515.9
(22) Date of filing: 19.04.2005
(51) Int. Cl.: H02M 1/00, H02M 3/00

(54) **A CHANGEABLE DC OUTPUT VOLTAGE ADAPTER WITH VOLTAGE LEVEL DISPLAY**

(30) Priority: 23.04.2004 CN 200410037508
(71) Applicant: Golden Bridge Electech Inc., Pei-shen Keng Taipei County, Taiwan 222 (CN)
(72) Inventor: WU, Zuyu, Taipei Hsien Taiwan 231 (CN)
(74) Representative: Jeannet, Olivier
(86) International application number: PCT/CN2005/000537
(87) International publication number: WO 2005/104341

(57) **Abstract**

A power conversion device includes a DC-to-DC conversion circuit that receives and processes a DC power input and supplies a DC output of a predetermined voltage level, an output connector receiving the DC output and having power terminals to transmit the DC output and a plurality of level-selecting terminals, a terminal device having counterpart power terminals and a plurality of counterpart level-selecting terminals, which engage the power terminals and the level-selecting terminals of the output connector, respectively, a feedback circuit coupled to the DC-to-DC conversion circuit and connected to each level-selecting terminal by a resistor having a predetermined resistance to provide a feedback signal to the DC-to-DC conversion circuit which in turn changes the voltage level of the DC output, and a display circuit, which is coupled to the output connector to display the voltage level of the DC output at the power terminals of the output connector.

## Description

### BACKGROUND OF THE INVENTION

### 1. Field of the Invention

The present invention relates generally to a power conversion device, which can be made in the form of an adaptor, and in particular to a power converter comprising an output voltage level indicating device for indication and easy reading of selectable output levels of voltage.

### 2. Description of the Prior Art

Portable electronic appliances, such as mobile phone and notebook computer, play an important role in the modem world in doing business and society activities. Such portable appliances are often powered by built-in power sources, which must be constantly recharged in order to maintain operability of the portable appliances. Also, external powering is also available for most of the portable appliances, such as wall outlet, automobile electrical system including cigarette lighter socket and electrical socket regularly available in airplanes. Often the external powering must be converted by for example a conversion circuit made in the form of an adaptor before it can be supplied to the portable appliances.

However, the portable appliances are often operated with different working voltages and for such a reason, the general consumers that own and use two or more different portable appliance must regularly bring two or more adaptors corresponding to those portable appliances. This complicates the use of the portable appliances and is very troublesome to the consumers. US Patent No. 6,628,535, issued to the present inventor, teaches a power conversion device that provides variable output voltage levels to different appliances or loads. The power conversion device of the '535 Patent comprises an output to which a terminal connector is selectively coupled. The terminal connector comprises a circuit comprised of resistors that generates a feedback signal to a control circuit of the power conversion device, inducing a corresponding voltage level at the output of the conversion device.

Such a conventional power conversion device works well in supplying voltage of different levels to electronic appliances that operates with different working voltages. It, however, is still unclear to a user what voltage level is being output by the power conversion device when the device is powering an electronic appliance. This may cause problem to the user.

Thus, the present invention is aimed to provide a power conversion device that overcomes the drawback of the conventional devices.

### SUMMARY OF THE INVENTION

An object of the present invention is to provide a power conversion device that selectively supplies output voltage of different levels to different electronic appliances and comprising indicating device that shows or indicates the output voltage level that is being supplied

Another object of the present invention is to provide a multi-output power conversion device comprising an indicating device that displays or indicates an output level for each output.

To achieve the above objects, in accordance with the present invention, there is provided a power conversion device comprising a DC-to-DC conversion circuit that receives and processes a DC power input and supplies a DC output of a predetermined voltage level, an output connector receiving the DC output and having power terminals to transmit the DC output and a plurality of level-selecting terminals, a terminal device having counterpart power terminals and a plurality of counterpart level-selecting terminals, which engage the power terminals and the level-selecting terminals of the output connector, respectively, a feedback circuit coupled to the DC-to-DC conversion circuit and connected to each level-selecting terminal by a resistor having a predetermined resistance to provide a feedback signal to the DC-to-DC conversion circuit which in turn changes the voltage level of the DC output, and a display circuit, which is coupled to the output connector to display the voltage level of the DC output at the power terminals of the output connector.

### BRIEF DESCRIPTION OF THE DRAWINGS

The present invention will be apparent to those skilled in the art by reading the following description of preferred embodiments thereof, with reference to the attached drawings, in which:

**Figure 1** is a perspective view of a power conversion device constructed in accordance with a preferred embodiment of the present invention with connection cables detached therefrom;

**Figure 2** is a block diagram of a control circuit of the power conversion device of the present invention;

**Figure 3** is a first embodiment of a voltage level indicating circuit in accordance with the present invention;

**Figure 4** is a second embodiment of the voltage level indicating circuit in accordance with the present invention;

**Figure 5** is a third embodiment of the voltage level indicating circuit in accordance with the present invention;

**Figure 6** is a perspective view of a power conversion device constructed in accordance with another preferred embodiment of the present invention with connection cables detached therefrom; and

**Figure 7** is a block diagram of a control circuit of the power conversion device illustrated in **Figure 6.**

### DETAILED DESCRIPTION OF THE PREFERRED EMBODIMENTS

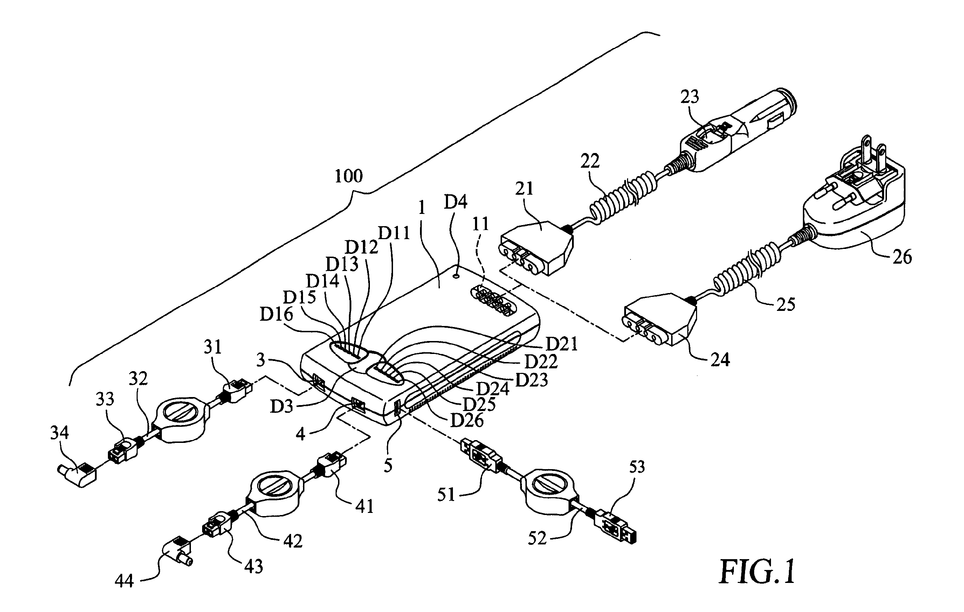

With reference to the drawings and in particular to **Figure 1,** a power conversion device constructed in accordance with the **present** invention, generally designated with reference numeral **100,** comprises a casing **1** that forms an input socket **11** with which a plug **21** of a power cord **22** is engageable. The power cord **22** has a proximal end forming the plug **21** and a remote end forming a plug connector **23** that is compatible to and engageable with a standard cigarette lighter socket provided in an automobile (both not shown). Thus, power from an electrical system of an automobile can be supplied by the power cord **22** to the power conversion device **100** of the present invention. The plug connector **23** can be configured to mate with a power socket provided in an airplane.

The power conversion device **100** is provided with an alternative power cord **25** having opposite ends forming a plug **24** that is engageable with the input socket **11** of the casing **1** and a plug **26** for selective engagement with an electrical main, such as a wall outlet (not shown). Preferably, the plug **26** is of a universal design that is compatible with different types of wall outlet around the worlds, such as wall outlets of **110** and **220** volts.

The casing **1** forms first and second output sockets **3, 4,** both supplying direct current outputs. Two extension cables **32, 42** are provided to respectively connect an electronic appliance (not shown) to the first and second output sockets **3, 4.** The first extension cable **32** has opposite ends forming a device-side plug **31** and an appliance-side connector **33,** respectively. The device-side plug **31** is engageable with the first output socket **3** and the appliance-side connector **33** is engageable with a first level-selecting terminal device **34**, which provides output voltage of **V1+, V1**- that is variable (to be further discussed hereinafter) to an electronic appliance powered by the power conversion device **100** via the first extension cable **32.** Preferably, the first extension cable **32** is releasably stowed in a cable-winding device (not labeled) to avoid entangling of the cable.

Similarly, the second extension cable **42** has opposite ends forming a device-side plug **41** and an appliance-side connector **43,** respectively. The device-side plug **41** is engageable with the second output socket **4** and the appliance-side connector **43** is engageable with a second level-selecting terminal device **44,** which provides output voltage of **V2+, V2-** that is variable (to be further discussed hereinafter) to an electronic appliance powered by the power conversion device **100** via the second extension cable **42.** Preferably, the second extension cable **42** is releasably stowed in a cable-winding device (not labeled) to avoid entangling of the cable.

The casing **1** further forms a third output socket **5** for powering an electronic appliance via a third extension cable **52.** The third extension cable **52** has opposite ends, respectively forming a device-side plug **51** that is engageable with the third output socket **5** and an appliance-side USB (Universal Serial Bus) plug **53** that supplies a constant direct current output of voltage **V3+, V3-** of for example **5** volts. Such a constant output can be used to power small-load appliance (not shown). Preferably, the third extension cable **52** is releasably stowed in a cable-winding device (not labeled) to avoid entangling of the cable.

The casing **1** has a top face (not labeled) on which display means is formed to indicate/display the output voltage level of each level-selecting terminal device **34, 44.** For example, the display means may comprise a set of first indicators **D11-D16** associated with, and preferably adjacent to, the first output socket **3** for indicating/displaying the voltage output **V1+**, **V1-**, and set of second indicators **D21-D26** associated with, and preferably adjacent to, the second output socket **4** for indicating/displaying the voltage output **V2+, V2-**. A further indicator **D3** is arranged on the top face of the casing **1** for indicating normal/abnormal condition of the output voltage **V3+, V3-.** A power indicator **D4** is also provided on the top face of the casing **1** to indicate normal/abnormal input of power from an external power source through the input socket **11.**

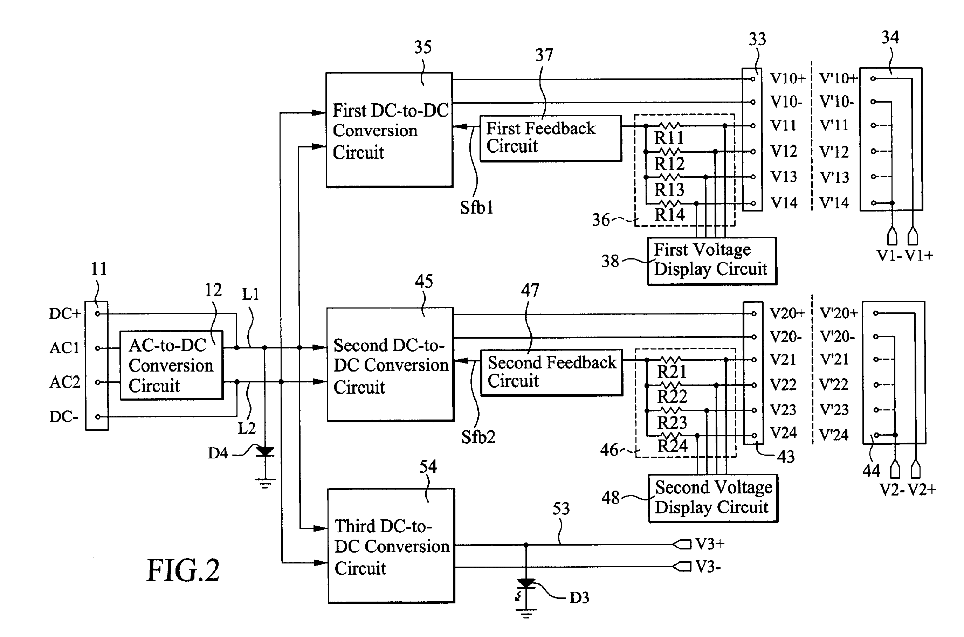

Also referring to **Figure 2,** which shows a block diagram of a control circuit of the power conversion device **1,** the input socket **11** comprises direct current input terminals **DC+, DC-** and alternate current input terminals **AC1, AC2,** which are arranged to respectively receive electrical current from the plug **21** of the power cord **22** (DC input) and the plug **24** of the alternative power cord **25** (AC input) when the plugs **21, 24** are alternately inserted into the input socket **11.** The DC input terminals **DC+**, **DC-** are directly coupled to lines **L1, L2** of the control circuit, while the AC input terminals **AC1**, **AC2** are coupled to the lines **L1**, **L2** via a AC-to-DC conversion circuit **12,** which converts the AC input from the power cord **25** into DC power that is then applied to the line **L1, L2.** Indicator **D4** shows normal operation of power receiving through the power cords **22, 25.**

The control circuit comprises first, second, and third DC-to-DC conversion circuits **35, 45, 54,** respectively associated with the first, second, and third output sockets **3, 4, 5,** all connected to the line **L1, L2** to receive power from the input socket **11.** With the device-side plug **31, 41, 51** of each extension cable **32, 42, 52** received in the associated output socket **3, 4, 5,** the first, second, and third DC-to-DC conversion circuits **35, 45, 54** are respectively and electrically connected to the first, second, and third appliance-side connectors **33, 43, 53.**

The first appliance-side connector **33** comprises primary, power terminals **V10+, V10-** coupled to the first DC-to-DC conversion circuit **35.** A first resistor network **36** and a first feedback circuit **37,** which are connected in series, are connected between the first appliance-side connector **33** and the first DC-to-DC conversion circuit **35** in parallel to the connection between the primary terminals **V10+, V10-** and the first DC-to-DC conversion circuit **35.** The first feedback circuit **37** provides a first feedback signal **Sfb1** to the first DC-to-DC conversion circuit **35.** The first resistor network **36** is comprised of resistors **R11, R12, R13,** and **R14,** which are in turn connected to secondary, level-selecting terminals **V11, V12, V13,** and **V14** of the first appliance-side connector **33.** A first voltage display circuit **38** is connected to the secondary, level-selecting terminals **V11**, **V12**, **V13**, and **V14** of the first resistor network **36.**

The first level-selecting terminal device 34 is comprised of primary and secondary terminals **V'10**+, **V'10-, V'11, V'12, V'13,** and **V'14,** which respectively engage the primary and secondary terminals **V10+**, **V10-**, **V11**, **V12**, **V13**, and **V14** of the first appliance-side connector **33**, when the first level-selecting terminal device **34** mates the first appliance-side connector **33**. By selective use of different jump connection between the secondary terminals **V'11**, **V'12**, **V'13**, and **V'14** and the primary terminal **V'10-**, a different resistance is observed in the first resistor network **36**, which changes the first feedback signal **Sfb1** and thereby changes the output level of voltage at the output **V1+**, **V1-** of the first level-selecting terminal device **34**. The output level of voltage at output **V1+**, **V1-** is displayed on the first voltage display device **38.**

Similarly, the second appliance-side connector **43** comprises primary, power terminals **V20+**, **V20-** coupled to second DC-to-DC conversion circuit **45.** A second resistor network **46** and a second feedback circuit **47,** which are connected in series, are connected between the second appliance-side connector **43** and the second DC-to-DC conversion circuit **45** in parallel to the connection between the primary terminals **V20+**, **V20-** and the second DC-to-DC conversion circuit **45.** The second feedback circuit **47** provides a second feedback signal **Sfb2** to the second DC-to-DC conversion circuit **45.** The second resistor network **46** is comprised of resistors **R21, R22, R23**, and **R24**, which are in turn connected to secondary, level-selecting terminals **V21**, **V22, V23**, and **V24** of the second appliance-side connector **43.** A second voltage display circuit **48** is connected to the secondary, level-selecting terminals **V21, V22, V23,** and **V24** of the second resistor network **46.**

The second level-selecting terminal device **44** is comprised of primary and secondary terminals **V'20+**, **V'20-**, **V'21**, **V'22**, **V'23**, and **V'24**, which respectively engage the primary and secondary terminals **V20+, V20-**, **V21, V22, V23,** and **V24** of the second appliance-side connector **43**, when the second level-selecting terminal device **44** mates the second appliance-side connector **43**. By selective use of different jump connection between the secondary terminals **V'21, V'22, V'23,** and **V'24** and the primary terminal **V'20-**, a different resistance is observed in the second resistor network **46,** which changes the second feedback signal **Sfb2** and thereby changes the output level of voltage at the output **V2+, V2-** of the second level-selecting terminal device **44**. The output level of voltage at output **V2+, V2-** is displayed on the second voltage display device **48.**

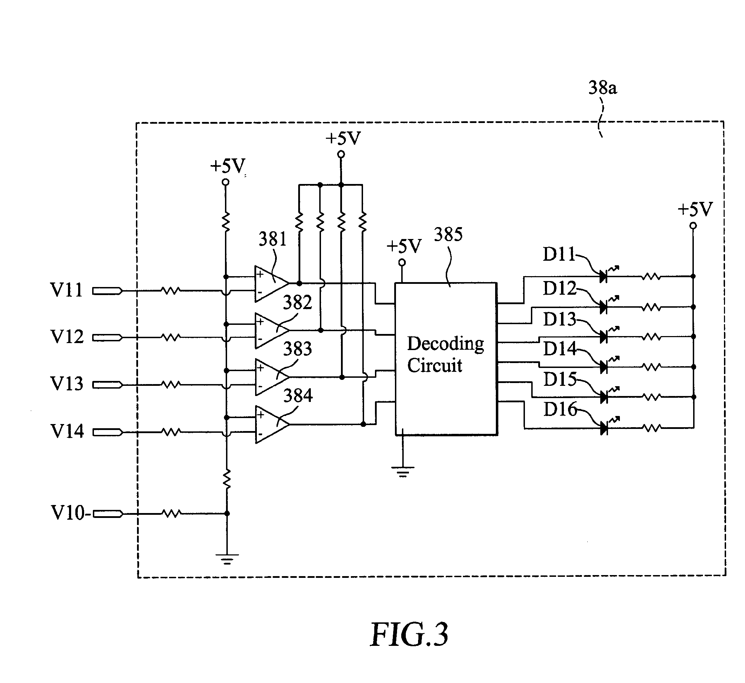

Also referring to **Figure 3,** a first example of the first voltage display device **38** comprises a circuit **38a** comprising operational amplifiers **381, 382, 383, 384** each having a first input connected to the level-selecting terminals **V11**, **V12**, **V13**, and **V14** of the first resistor network **36** whereby each operational amplifier **381**, **382**, **383**, **384** and the associated resistor **R11**, **R12**, **R13**, **R14** forms a comparison circuit. Each operational amplifier **381**, **382, 383, 384** has a second input connected to a power source of +5V. Each operational amplifier **381, 382, 383, 384** has an output coupled to and applying an output signal to a decoding circuit **385,** which in turn generates output signals applied to and driving the indicators **D11-D16**. Thus, the indicators **D11-D16** shows to a user of the power conversion device **100** of the voltage level at the output **V1+, V1-**.

The circuit **38a** may also be applied to the second voltage display device **48** and thus no further description of the detailed structure of the second voltage display device **48** will be given hereinafter.

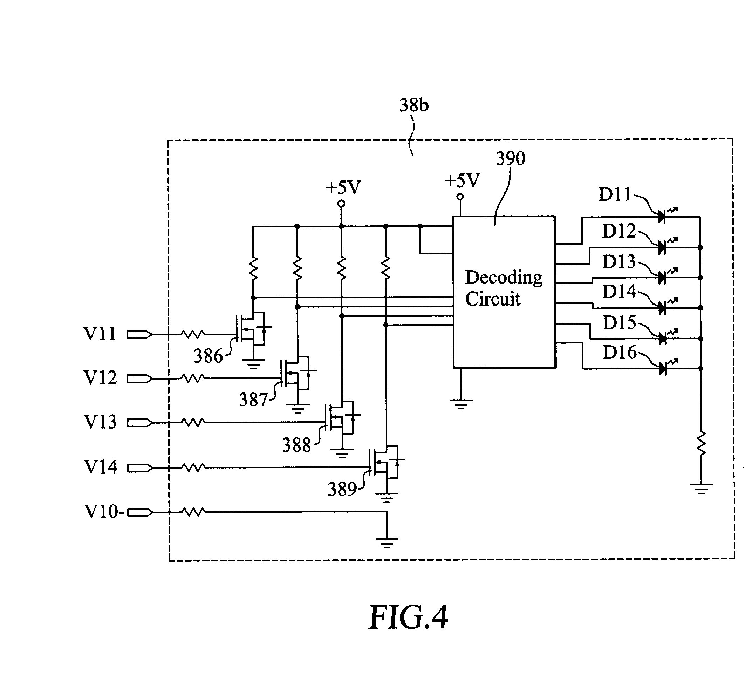

Also referring to **Figure 4,** a second example of the first voltage display device **38** comprises a circuit **38b** comprising transistors **386, 387, 388, 389** respectively connected to the level-selecting terminals **V11, V12, V13**, and **V14** of the first resistor network **36**. Each transistor **386, 387, 388, 389** generates an output signal associated with ON/OFF state thereof and applies the output signal to a decoding circuit **390,** which in turn generates output signals applied to and driving the indicators **D11-D16.** Thus, the indicators **D11-D16** shows to a user of the power conversion device **100** of the voltage level at the output **V1+, V1-.** Again, the second voltage display circuit **48** may incorporate the circuit **38b.**

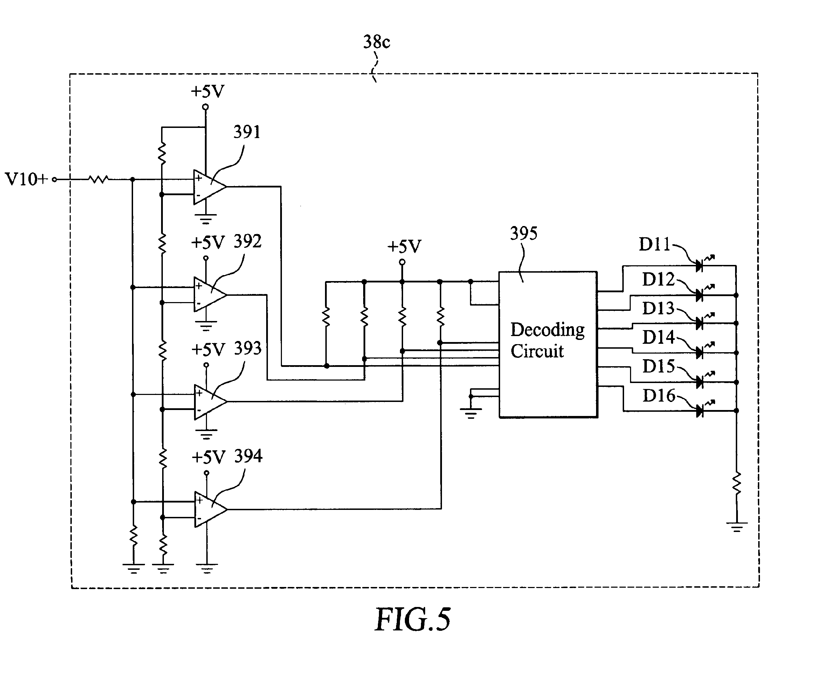

Also referring to **Figure 5,** a third example of the first voltage display device **38** comprises a circuit **38c** comprising operational amplifiers **391, 392, 393, 394** each having a first input commonly connected to the primary terminal **V10+** whereby the operational amplifiers. Each operational amplifier 391, 392, 393, 394 has an output coupled to and applying an output signal to a decoding circuit **395,** which in turn generates output signals applied to and driving the indicators **D11-D16.** Thus, the indicators **D11-D16** shows to a user of the power conversion device **100** of the voltage level at the output **V1+, V1-.** Again, the second voltage display circuit **48** may incorporate the circuit **38c.**

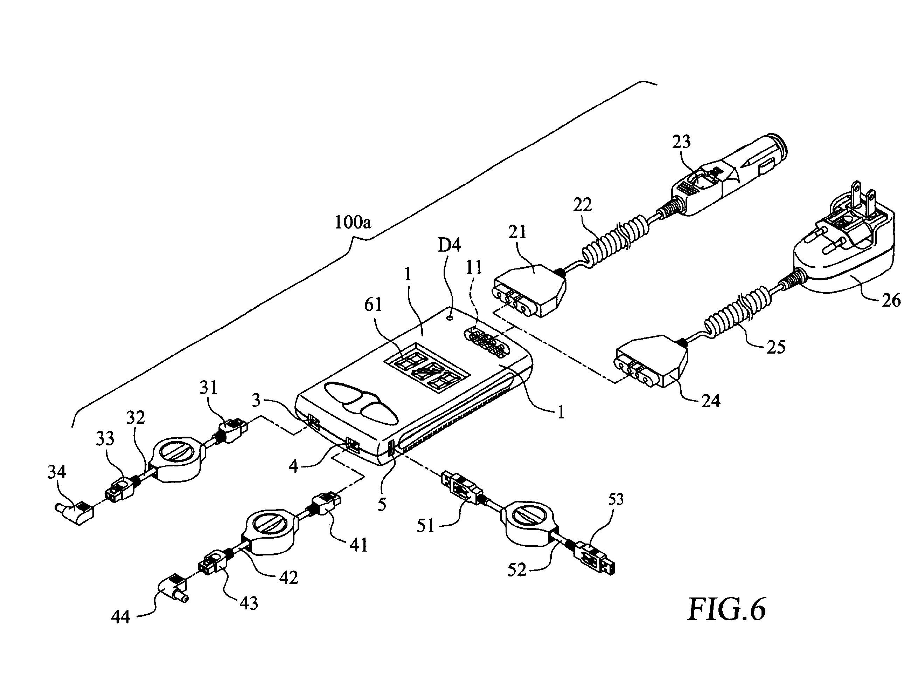

Also referring to **Figure 6,** a power conversion device constructed in accordance with another embodiment of the present invention, generally designated with reference numeral **100a,** is shown. The power conversion device **100a** is substantially identical to the power conversion device **100** with reference to **Figures 1** and **2,** except that the first and second voltage display devices **38, 48** comprise a liquid crystal display device **61.** The outputs of the first and second level-selecting terminal device **34, 44** are alternately displayed in the liquid crystal display **61.** Alternatively, a manual switch is provided to allow a user to selectively display the outputs of the first and second level-selecting terminal device **34, 44.**

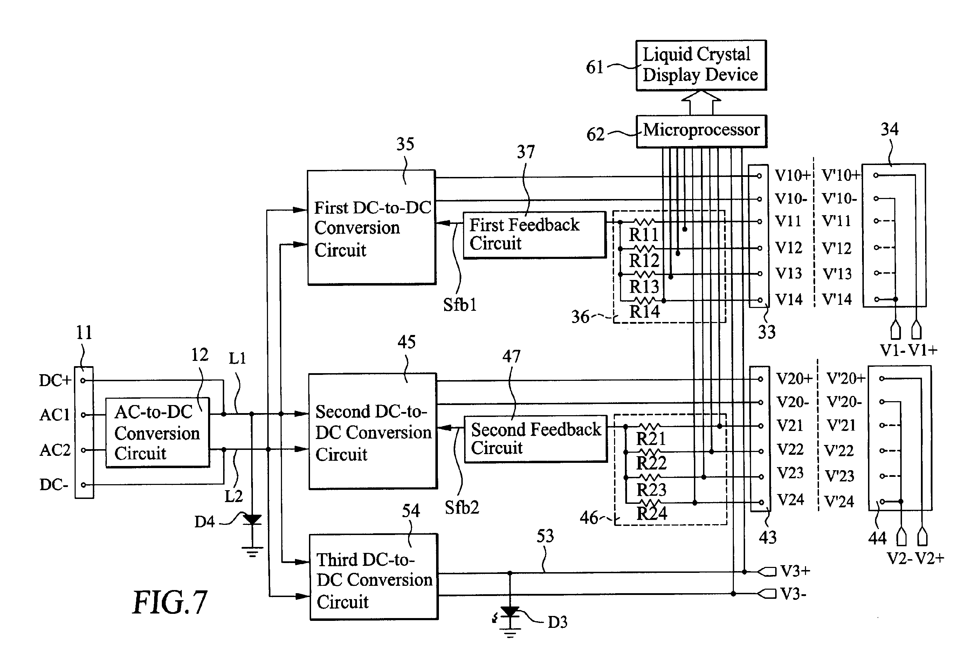

A block diagram of a control circuit of the power conversion device **100a** is shown in **Figure 7,** which is substantially identical to the control circuit of the power conversion device **100,** except that a microprocessor **62** is coupled, via any known interface, to the first and second resistor networks **36, 46,** as well as the third DC-to-DC conversion circuit **54** to detect voltage level at the associated outputs. The microprocessor **62** controls the liquid crystal display **61** to display the voltage levels. The first and second voltage display circuits **38, 48** of the power conversion device **100** are thus omitted here.

Although the present invention has been described with reference to the preferred embodiments thereof, it is apparent to those skilled in the art that a variety of modifications and changes may be made without departing from the scope of the present invention intended to be defined by the appended claims.

## Claims

1. A power conversion device comprising:
a voltage conversion circuit adapted to receive a DC power input from an external power source and converting the input into a DC output of a predetermined voltage level;
an output connector receiving the DC output and comprising power terminals to transmit the DC output and at least one level-selecting terminal;
a terminal device comprising counterpart power terminals and at least one counterpart level-selecting terminal, the terminal device being selectively mateable with the output connector to have the counterpart power terminals and at least one counterpart level-selecting terminal engaging the power terminals and the at least one level-selecting terminal of the output connector, respectively, and the at least one counterpart level-selecting terminal being selectively connected to the counterpart power terminals;
a feedback circuit coupled to the voltage conversion circuit and connected to each level-selecting terminal, wherein, in response to the connection between the counterpart level-selecting terminal and the counterpart power terminals, the feedback circuit generates and applies a feedback signal to the voltage conversion circuit which in turn changes the voltage level of the DC output; and
a display circuit, which is coupled to the output connector to display the voltage level of the DC output at the power terminals of the output connector.

2. The power conversion device as claimed in Claim 1, wherein the display circuit comprises indicators connected to the terminals of the output connector to indicate the voltage level of the DC output transmitted through the output connector.

3. The power conversion device as claimed in Claim 1, wherein the display circuit comprises a liquid crystal display unit to selectively display the voltage level of the DC output transmitted through the output connector.

4. The power conversion device as claimed in Claim 1 further comprising a USB connector that is electrically coupled to an additional voltage conversion circuit that receives the input power whereby the USB connector is adapted to selectively connect to and supply a constant DC voltage to an external load.

5. The power conversion device as claimed in Claim 1, wherein the voltage conversion circuit is a DC-to-DC conversion circuit.

6. The power conversion device as claimed in Claim 1, wherein the feedback circuit connects to each level-selecting terminal by a resistor having a predetermined resistance, in response to the connection between the counterpart level-selecting terminal and the counterpart power terminals and based on the predetermined resistance of the resistor, the feedback circuit generates and applies the feedback signal to the power conversion circuit.

7. A power conversion device comprising:
a plurality of voltage conversion circuits adapted to receive a DC power input from an external power source and each converting the input into a DC output of a predetermined voltage level;
a plurality of output circuits coupled to the voltage conversion circuits respectively and each comprising:
an output connector receiving the DC output of the associated voltage conversion circuit, the output connector comprising power terminals to transmit the DC output and at least one level-selecting terminal,
a terminal device comprising counterpart power terminals and at least one counterpart level-selecting terminal, the terminal device being selectively mateable with the output connector to have the counterpart power terminals and at least one counterpart level-selecting terminal engaging the power terminals and the at least one level-selecting terminal of the output connector, respectively, and the at least one counterpart level-selecting terminal being selectively connected to the counterpart power terminals, and
a feedback circuit coupled to the associated voltage conversion circuit and connected to each level-selecting terminal, wherein, in response to the connection between the counterpart level-selecting terminal and the counterpart power terminals, the feedback circuit generates and applies a feedback signal to the associated voltage conversion circuit which in turn changes the voltage level of the DC output thereof; and
display means coupled to each output connector to selectively display the voltage level of the DC output at the power terminals of the output connector.

8. The power conversion device as claimed in Claim7, wherein the display means comprises a display circuit coupled to each output connector, the display circuit comprising indicators connected to the terminals of the output connector to indicate the voltage level of the DC output transmitted through the output connector.

9. The power conversion device as claimed in Claim 7, wherein the display means comprises a liquid crystal display unit to selectively display the voltage level of the DC output transmitted through each output connector.

10. The power conversion device as claimed in Claim 7 further comprising a USB connector that is electrically coupled to an additional DC-to-DC conversion circuit that receives the input power whereby the USB connector is adapted to selectively connect to and supply a constant DC voltage to an external load.

11. The power conversion device as claimed in Claim 7, wherein the voltage conversion circuit is a DC-to-DC conversion circuit.

12. The power conversion device as claimed in Claim 7, wherein the feedback circuit connects to each level-selecting terminal by a resistor having a predetermined resistance, in response to the connection between the counterpart level-selecting terminal and the counterpart power terminals and based on the predetermined resistance of the resistor, the feedback circuit generates and applies the feedback signal to the power conversion circuit.

13. A power conversion device comprising:
a casing forming a power input socket adapted to receive a power plug that is connected to an external power source and at least one power output socket;
an output connector electrically coupled to each power output socket by a plug member of an extension cable;
an output level selecting device mateable with the output connector and comprising a circuit for selectively switching an output voltage between at least two different levels; and
a display unit, which is arranged on the casing to display the level of the output voltage.

14. The power conversion device as claimed in Claim 13, wherein the display unit comprises indicators that indicate the level of the output voltage.

15. The power conversion device as claimed in Claim 13, wherein the display unit comprises a liquid crystal display to selectively display the level of the output voltage.

16. The power conversion device as claimed in Claim 13 further comprising a socket that supplies a constant output voltage and an extension cable having a plug mateable with the socket and a USB connector adapted to supply the constant output voltage to an external load.
